# EUROPÄISCHE PATENTSCHRIFT

(11) **EP 0 414 061 B1**
(45) Veröffentlichungstag und Bekanntmachung des Hinweises auf die Patenterteilung: **12.01.1994**
(21) Anmeldenummer: 90115348.6
(22) Anmeldetag: 10.08.1990
(51) Int. Cl.: B65G 47/14

(54) **Vorrichtung zum Herausziehen eines einzelnen Metallstabes aus einem aus mehreren Stäben bestehenden Stabbündel**
Device for drawing a metal rod out of a rod bundle
Dispositif pour retirer une barre métallique d'un faisceau de barres

(30) Priorität: 21.08.1989 FI 893927
(43) Veröffentlichungstag der Anmeldung: 27.02.1991
(73) Patentinhaber: PINTOS OY, 27510 Eura (FI)
(72) Erfinder: Pere, Tuomo Jorma Sakari, SF-27510 Eura (FI)
(74) Vertreter: Patentanwälte Lippert, Stachow, Schmidt & Partner

(56) Entgegenhaltungen:
- DD-A- 114 573
- DD-A- 239 997
- DE-A- 2 849 751
- DE-C- 1 014 060

## Beschreibung

Die Erfindung betrifft eine Vorrichtung zum Herausziehen eines einzelnen Metallstabes aus einem aus mehreren Stäben bestehenden Stabbündel in einer Zugrichtung, die im wesentlichen der Längsrichtung der Stäbe des Bündels entspricht, mit einer zur Zugrichtung im wesentlichen senkrecht angeordneten Stabführung, in der sich eine V-förmige Öffnung befindet, von deren Grund aus sich ein in etwa lotrechter Führungsschacht erstreckt, und einer Zugvorrichtung, die so ausgebildet ist, daß sie einen einzelnen Stab aus dem Bündel zu greifen und herauszuziehen vermag.

Beim modernen Bauen werden bei Betongußarbeiten in großen Mengen industriell hergestellte Bewehrungsmatten und Bindegewebe verarbeitet. Diese Matten werden hergestellt, indem Längsdrähte oder -stäbe mit Querdrähten oder -stäben durch Widerstands-Punktschweißung miteinander verbunden werden. Bewehrungsmatten können z. B. als Matten in der Größe 10 m mal 3,35 m angefertigt werden, und der Stababstand oder die Stabverteilung kann innerhalb bestimmter Grenzen gewählt werden. Bindegewebe werden gewöhnlich mit Standardstabverteilung gefertigt, und die Gewebelänge kann bis zu 50 m betragen. Bei der Herstellung von Bewehrungsmatten werden zunächst die Längsstäbe in bestimmten Abständen zueinander auf einen Beschicker gelegt. Danach werden die Stäbe zur Schweißmaschine geführt, die an diese Querstäbe anschweißt. Bei der Bindegewebeherstellung können die Längsdrähte direkt von Lagerrollen zur Schweißmaschine geführt werden, oder bei der Herstellung eines kürzeren Gewebes werden auf Länge geschnittene Drähte auf einen Beschickungstisch gelegt. Naturgemäß setzt die Breite der Schweißmaschine der Breite des herzustellenden Gewebes Grenzen. Die Bezeichnung Draht ist in der Branche üblich bei einem Durchmesser von 3 bis 4 mm und die Bezeichnung Stab bei einem Durchmesser von 5 bis 12 mm. Nach neuem Standard gilt die Bezeichnung Stab auch für 3 und 4 mm Drähte, aufgrund dessen im folgenden die Bezeichnung "Stab" für jeden beliebigen der oben genannten Durchmesser benutzt wird. Zur Herstellung einer Bewehrungsmatte oder eines kurzen Bindegewebes sind die auf Maß geschnittenen Längsstäbe von Hand auf einen Beschickungstisch zu legen. Die Stäbe befinden sich in einem großen Bündel, aus dem der Eisenflechter jeden Stab herauszieht und diese auf den Beschickungstisch in Rillen legt, die bestimmte Abstände zueinander haben. Wenn alle Rillen gefüllt, d. h. alle Längsstäbe der Matte angelegt sind, werden die Stäbe der Schweißmaschine zugeführt. Diese Arbeitsphase ist sehr anstrengend und zeitaufwendig. Wenn die Stäbe untereinander verschlungen sind, ist das Herausziehen eines einzelnen Stabes äußerst schwierig.

Eine Vorrichtung der eingangs genannten Art ist z. B. aus der DE-C-10 14 060 bekannt. Bei der dort beschriebenen Vorrichtung handelt es sich um eine Vorrichtung zum Einführen von rundem Halbzeug, z. B. Stangen, in Bearbeitungsmaschinen mit axialer Vorschubbewegung. Zur Aufnahme und zum Anheben der Stangen an einem Ende dient ein gabelförmig ausgebildeter, in der Mitte geschlitzter Hebel, der um einen in der Maschinenlängsachse liegenden Drehpunkt über einer aus zwei feststehenden Teilen gebildeten Rinne hin und her bewegt wird, wobei die Stangen einzeln nacheinander in die Rille fallen. Beiderseitig der Rinne sind Sperrnasen angeordnet, welche in die Rinne hineinreichen und welche durch die hin und her gehende Schwenkbewegung der Gabel wechselweise aus der Rinne heraus und in diese hinein bewegt werden. Zunächst fällt eine Stange auf die obere Sperrnase, wodurch sie und alle nachfolgenden Stangen aufgehalten werden. Wird die oberste Sperrnase aus der Rinne heraus bewegt, fällt die Stange auf die untere Sperrnase, von welcher sie bei Schwenken der Gabel in die andere Richtung feigegeben wird, wonach sie auf einen Kontakthebel am Boden der Rinne fällt, der die Schwenkbewegung der Gabel solange unterbricht, bis die Stange den Kontakt verlassen hat. Sodann wird das aus der Rinne herausragende Ende der Stange von zwei Transportscheiben erfaßt, die die Stange aus der Rinne herausziehen und diese gleichzeitig um ihre Längsachse drehen. Wenn die Stange den Kontakt verlassen hat, wird ein elektrischer Impuls zum Einschalten einer Zeituhr gegeben, die so eingestellt ist, daß die nächste Stange erst freigegeben wird, wenn die erste Stange die Transportscheiben verlassen hat.

Der Erfindung liegt die Aufgabe zugrunde, eine Vorrichtung zu schaffen, mit der ein einzelner Stab automatisch aus einem großen Bündel gezogen werden kann, wobei die Vorrichtung einfach, zuverlässig und schnell sein soll.

Die Aufgabe wird erfindungsgemäß dadurch gelöst, daß die Stabführung einen Zuführungsspalt, der quer zum Führungsschacht verläuft und sich mit einem Ende zum unteren Ende des Führungsschachtes öffnet, einen Schieber, der sich in Richtung des Zuführungsspaltes im Zuführungsspalt oder neben diesem hin und her bewegt und dessen Bewegungslänge ungefähr so lang ist wie der Zuführungsspalt, und eine Stützplatte aufweist, die sich in Zugrichtung in einem Abstand von der Stabführung in einer Ebene im wesentlichen rechtwinklig zur Zugrichtung des Stabes befindet, wobei die Stabenden des Stabbündels sich gegen die Stützplatten abstützen.

Die Stützplatte verhindert zuverlässig, daß andere Stäbe als der herauszuziehende Stab sich in Zugrichtung bewegen. Die erfindungsgemäße Vorrichtung ermöglicht das Anheben des Stabbündels an einem Ende. In der Stabführung befindet sich eine V-förmige Öffnung, die sich nach unten verjüngt. Das Stabbündel wird an dem einen Enden von den Kanten der V-förmigen Öffnung angehoben und die Stabenden des Bündels stoßen gegen die Fläche der Stützplatte. Die Stützplatte ist ebenfalls eine vertikale Platte, die sich in einem kleinen Abstand zur Stabführung befindet. Die Stabführung hat ferner einen vertikalen Spalt, der vom Grund der V-förmigen Öffnung abwärts verläuft. Dieser Spalt mit der Länge H ist an seinem unteren Ende mit einem zweiten Spalt verbunden, der rechtwinklig zu diesem ersten Spalt verläuft. Die Breite der Spalte ist etwas größer als der Durchmesser des zu ziehenden Stabes. Weil das Stabbündel am Ende auf der Seite der Stabführung angehoben ist, befinden sich die Stäbe in leicht eingebogener Form in der Stangenführung. Das bedeutet, daß sich auf die stabführungsseitigen Stabenden des Stabbündels eine durch die Durchbiegung des Stabes bedingt nach unten wirkende Federkraft richtet. Diese Kraft wird in der Stabführung ausgenutzt. Die Kraft zwingt die in der V-förmigen Öffnung zu unterst liegenden Stäbe durch ihre Wirkung auf diese in den vertikalen Spalt, und wenn der Stab am unteren Ende des Spaltes eintrifft, wird der Schieber aktiviert, und dieser schiebt den Stab aus diesem Spalt in den in Seitenrichtung verlaufenden zweiten Spalt. Wenn der Stab zum Ende dieses Spaltes kommt, wird die Zugvorrichtung aktiviert, die den Stab greift und diesen aus dem Bündel zieht. Die Zugrichtung ist dieselbe, wie die Stabrichtung des Bündels. In der Stützplatte ist eine Öffnung ausgebildet, durch welche der Stab von der Zugvorrichtung getrieben wird. Der nächste Stab ruht während der Bewegung des Schiebers auf dem Schieber, und nach Rückkehr des Schiebers in dessen Ausgangsposition fällt der Stab im Spalt vor den Schieber, und der oben beschriebene Bewegungsablauf kann von vorne beginnen. Vor der Zugvorrichtung kann der Stab z. B. in Rillen geschickt werden, aus denen die Stäbe zur Schweißmaschine befördert werden.

Im Folgenden wird eine Ausführungsform der Erfindungsgemäßen Vorrichtung anhand der beigefügten Darstellung der Vorrichtung ausführlich erläutert, von denen
- Fig. 1: die Stabführung der erfindungsgemäßen Vorrichtung von vorne gesehen (Richtung A in Fig. 3) zeigt,
- Fig. 2: die Vorrichtung von oben gesehen (Richtung B in Fig. 3) zeigt,
- Fig. 3: eine Vorrichtung zeigt, die zum Auslegen der Längsstäbe von Stabmatten benutzt wird, und
- Fig. 4: die Anordnung von Fig. 3 in Draufsicht zeigt.

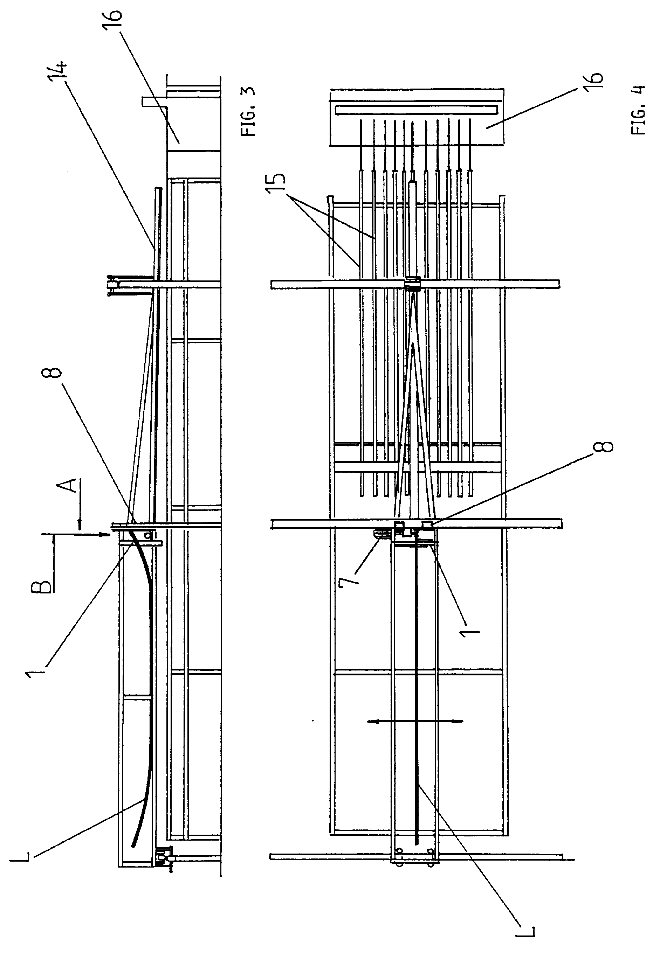

Das Stabbündel wird erfindungsgemäß derart gestützt, daß bei Horizontallage des Bündels auf den Unterstützungen dieses an dem von der Stabführung gestützten Ende leicht angehoben ist. Vorzugsweise ist auch das entgegengesetzte Ende des Bündels etwas anzuheben. Dies wird in Fig. 3 verdeutlicht, in der das Bündel durch einen einzelnen Stab L dargestellt ist. Das Bündel L wird von der Unterlage derart getragen, daß das eine Ende auf der Stabführung 1 ruht, indem es etwas angehoben ist. Die Stabenden des Bündels stoßen gegen die ebene vertikale Stützplatte 8. Die erfindungsgemäße Vorrichtung und das Stabbündel befinden sich in dieser Ausführungsform bezüglich des Stabbündels auf einem seitlich beweglichen Gestell. Dieses ist für die Erfindung nicht wesentlich und das Gestell wird nicht genauer beschrieben. Seine Konstruktion ist für den Fachmann aus Fig. 3 und 4 ersichtlich.

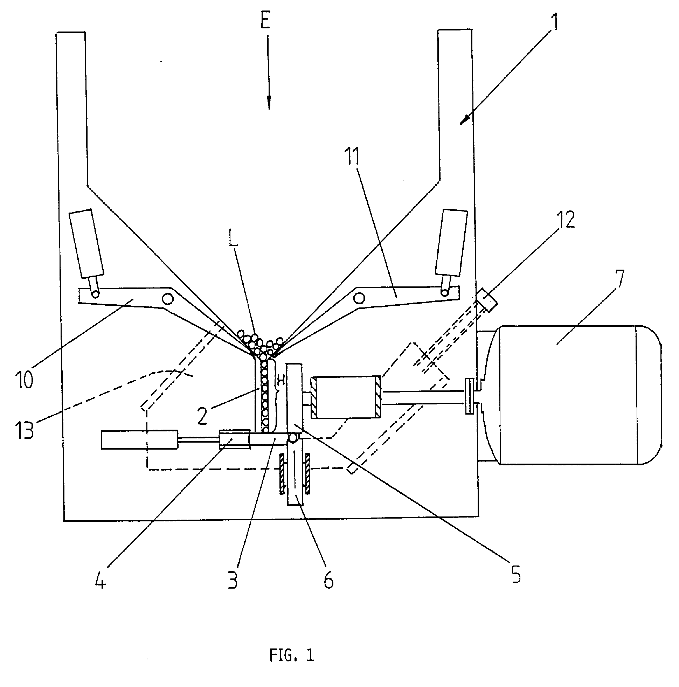

In Fig. 1 sind die Stabführung 1 und die Vorrichtungen zur Handhabung des Stabes gezeigt. Die im wesentlichen vertikale plattenartige Stabführung 1, die aus einer Stahlplatte oder einem angefertigten Balken oder einer ähnlichen Konstruktion bestehen kann, hat eine V-förmige Öffnung E. Die Stäbe des Stabbündels werden an deren einem Ende von den an diese Öffnung E angrenzenden Wänden der Stabführung getragen, wie in Fig. 1 gezeigt. In der Abbildung sind lediglich einige der unteren Stäbe umrissen. Vom Grund der V-förmigen Öffnung E öffnet sich nach unten ein vertikaler Führungsschacht 2, an den sich am unteren Ende ein Zuführungsspalt 3 anschließt. Die Länge des Führungsschachts ist H und der Zuführungsspalt 3 verläuft rechtwinklig zum Führungsschacht. Beide Spalte befinden sich in derselben Vertikalebene der Stabführung, die rechtwinklig zur Längsachse des Stabbündels verläuft. An der Stangenführung 1 ist ein Schieber 4 befestigt, der eine pneumatische oder elektrisch betriebene Vorrichtung sein kann. Die Spindel des Schiebers bewegt sich im Zuführungsspalt oder seitlich davon in dessen Richtung. Die Länge der Spindelbewegung des Schiebers ist ungefähr so lang wie die Länge des Zuführungsspaltes 3, wobei die eine Extremlage außerhalb des Führungsschachts 2 auf der entgegengesetzten Seite des Zuführungsspaltes 3 und die andere Extremlage in der Nähe des entgegengesetzen Endes des Zuführungsspaltes vor dem Treibrad 5 liegt.

Zur Vorrichtung gehört außerdem eine Zugvorrichtung, die aus einem mit Elektromotor 7 angetriebenen treibenden Rad und einem frei drehenden getriebenen Rad 6 besteht. Das zu treibende Rad 6 kann in Aufwärts/Abwärts-Richtung z.B. pneumatisch gegen das treibende Treibrad 5 oder von diesem weg gelenkt werden. Zur Stabführung 1 gehören auch Stabbewegungselemente 10 und 11, die nach Fig. 1 aus zweiarmigen Hebeln bestehen können, die sich pneumatisch oder elektrisch bewegen lassen. Deren Aufgabe wird weiter unten beschrieben.

Damit der Führungsschacht 2 und der Zuführungsspalt 3 zur jeweiligen Dicke des zu handhabenden Stabes passen, kann deren Spaltbreite mit einem Stellteil 13 eingestellt werden. Das Stellteil 13 ist ein Plattenstück, das einen 90° Innenwinkel beinhaltet. Das Stellteil befindet sich direkt neben der Stabführung 1 auf der gegenüberliegenden Seite vom Schieber 4, so daß die Schenkel des 90° Innenwinkels mit der unteren Seite des Zuführungsspaltes 3 und der sich daran anschließenden Seite des Führungsschachtes 2 bündig sind. Wenn nun das Stellteil mit den Stellschrauben 12 im Winkel von 45° in Richtung der Ebene, in der sich die Spalte 2 und 3 treffen, bewegt wird, lassen sich die Spalte auf die gewünschte Breite einstellen. Die Oberkante des Stellteils 13 ist in einem etwas flacheren Winkel angeschrägt als die Kante der V-förmigen Öffnung E, womit beim Verengen der Spalte 2 und 3 mit dem Stellteil ein Teil der einen Kante der V-förmigen Öffnung aus der Kante des Stellteils 13 gebildet wird. Dadurch werden keine Ecken erzeugt, die die Bewegung der Stäbe beeinträchtigen. Das Stellteil kann sich in Führungsschienen bewegen und zum Bewegen werden Schrauben 12 verwendet, wie bereits weiter oben erwähnt.

Die Antriebsvorrichtungen der Stäbe bestehen aus einem Elektromotor 7, der über eine Welle das Treibrad 5 antreibt, und dem getriebenen Rad 6. Die Mittellinien dieser Antriebsräder 5,6 befinden sich auf derselben Vertikalachse und sind derart angeordnet, daß die untere Horizontaltangente des Umfangs des festen, angetriebenen Treibrades 5 in der Nähe des geschlossenen Endes des Zuführungsspaltes ungefähr durch die Oberkante des Zuführungsspaltes 3 läuft. Diese Tangente läuft auch durch die Öffnung 9 in der Stützplatte 8. Das untere zu treibende Rad 6 kann sich in Vertikalrichtung auf einer Strecke bewegen, die etwas größer ist als die Breite des Zuführungsspaltes 3, wobei das getriebene Rad 6 pneumatisch gegen das treibende Treibrad 5 und von diesem weg gesteuert werden kann. Die Treibräder sind zwischen der Stabführung 1 und der Stützplatte 8 angeordnet.

Mit Abstand von der Stabführung 1 in Zugrichtung befindet sich die Stützplatte 8, deren Ebene rechtwinklig zur Zugrichtung der Stäbe, also parallel zur Ebene der Stangenführung ist. Die Stützplatte hat die Aufgabe, die Bewegung anderer als des zu ziehenden Stabes zu verhindern. Der Abstand der Stützplatte 8 von der Stangenführung 1 muß genügend klein sein, damit zwischen diesen die Stabenden des Stabbündels in ihrer Ordnung bleiben. Der geeignete Abstand ist ungefähr 200 mm. In der Stützplatte befindet sich ein Loch 9 genau gegen über dem Ende des Zuführungsspalts 3 der Stabführung 1, neben dem sich die Treibräder 5, 6 befinden. Das Loch ist genügend groß, damit der dickste Stab hindurchpaßt.

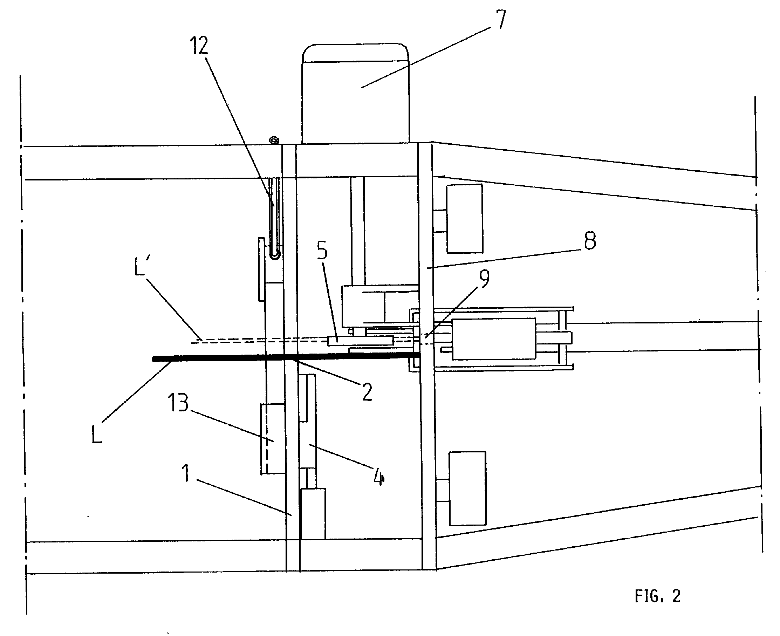

Aus Fig. 2 geht die gegenseitige Anordnung von Stabführung 1 und Stützplatte 8 hervor. Die Stabzugrichtung ist durch Pfeil gekennzeichnet, und hinweismäßig ist ein Stab L gezeigt, der sich im Führungsschacht 2 befindet. Gestrichelt ist ein Stab dargestellt, der vom Schieber 4 an das andere Ende des Zuführungsspaltes 3 zwischen die Treibräder 5 und 6 und vor das Loch 9 in der Stützplatte 8 geschoben worden ist. In der Abbildung ist auch das Stellteil 13 und dessen Stellschraube 12 zu sehen.

Die Stabführung 1, die Stützplatte 8 und alle anderen wesentlichen, zur Erfindung gehörenden Komponenten werden an einem geeigneten Gestellrahmen befestigt. Dessen Konstruktion beinhaltet zahlreiche verschiedene Einzelheiten, die dem Fachmann bekannt sind und daher hier nicht genauer beschrieben werden.

Im folgenden wird das erfindungsgemäße Verfahren unter Hinweis auf die obige Beschreibung der Vorrichtung und eine in Fig. 3 und 4 dargestellte praktische Ausführungsumgebung beschrieben.

Das Stabbündel L wird auf ein bewegliches Bett gehoben derart, daß ein Ende des Bündels auf die Kanten der V-förmigen Öffnung der Stabführung 1 kommt, wobei es etwas angehoben wird und die Stabenden an der Stützplatte 8 anliegen. Das andere Ende des Stabbündels ist dabei leicht angehoben, was in Fig. 3 zu sehen ist. Die untersten Stäbe des Bündels befinden sich an der Unterkante der V-förmigen Öffnung nahe dem Führungsschacht 2. Die durch die Durchbiegung hervorgerufene Federkraft verursacht gemeinsam mit den schrägen Wänden der V-förmigen Öffnung, daß die Stäbe übereinanderliegend in den Führungsschacht 2 gedrückt werden. Das Gelangen der Stäbe in den Führungsschacht wird mit den in Fig. 1 sichtbaren Bewegungselementen 10, 11 für die Stäbe unterstützt. Die Bewegungselemente, in diesem Fall zweiarmige Hebel 10 und 11, bewegen bei Bedarf mit ihren Spitzen die untersten Stäbe des Bündels am Eingang des Führungsschachtes 2, um deren Eindrücken in den Schacht 2 zu erleichtern. Wenn sich der Stab im Grund des Schachtes 2 befindet, schiebt der Schieber 4 den Stab aus der Zugrichtung seitlich in den Zuführungsspalt 3. Der nächste im Führungsschacht 2 befindliche Stab ruht während dieser Zeit auf dem Schieber 4. Bei der Bewegung des Stabes im Zuführungsspalt 3 vor dem Schieber zwischen die Treibräder 5 und 6 hebt sich das zu treibende Rad 6 dem ständig angetriebenen Treibrad 5 entgegen an und preßt den Stab fest zwischen diese Räder. Dabei ziehen die Räder den Stab aus dem Bündel und führen ihn durch die Öffnung 9 in der Stützplatte einem Empfangsrohr 14 zu. Unter dem Empfangsrohr befindet sich eine erforderliche Anzahl U-Balken 15, in welche der Reihe nach jeweils in eines davon der aus dem Bündel in das Rohr 14 gezogene Stab fallen gelassen wird. Die Unterseite des Rohres 14 läßt sich deswegen öffnen. Das Stabbündel, die Stabführungsplatte, die Stützplatte und die zum Ziehen des Stabes dienenden Vorrichtungen ebenso wie das Empfangsrohr sind an demselben Gestellrahmen befestigt, der seitlich beweglich ist, damit die Stäbe in die unbeweglichen U-Balken fallen gelassen werden können. Wenn der Stab aus dem Empfangsrohr 14 in einen der U-Balken gefallen ist, ist der Schieber 4 in seine Ausgangslage zurückgekehrt und ein neuer Stab aus dem Bündel ist im Grund des Führungsschachtes 2 eingetroffen. Das Treibrad 6 ist in seine untere Lage herabgesenkt. Der Schieber 4 bewegt sich wieder vorwärts, um einen neuen Stab zwischen die Treibräder zu schieben. Damit nicht aus Versehen zwei Stäbe in den Führungsschacht 2 geraten, wird an dem Außenwinkel von Führungsschacht 2 und Zuführungsspalt 3 ein Magnet, eine Feder oder ein Hebel angebracht, der den Stab in dem Winkel von Führungsschacht und Zuführungsspalt festhält während der Schieber in seiner hinteren Lage ist. Auf diese Weise werden die Stäbe einzeln der Reihe nach aus dem Bündel gezogen und in den U-Balken untergebracht. Wenn in allen U-Balken Stäbe sind, welche die Längsstäbe der Matte bilden, werden diese mit dem Längsstabschieber in die Schweißmaschine geschoben, die an diese Querstäbe schweißt. Alle Funktionen des beschriebenen Systems werden mit einer programmierbaren Logik gesteuert.

Das erfindungsgemäße Verfahren und die Vorrichtung eignen sich zum Ziehen von stabartigen Produkten, speziell Stahlstäben, aus einem aus einer Vielzahl von Stäben bestehenden Bündel. Der Stab kann aus dem Bündel gezogen werden, auch wenn er sich mit anderen Stäben verdreht haben sollte. Abhängig vom Prozeß können die Stäbe von Treibrädern einem Rohr zugeführt werden, wie dies weiter oben beschrieben ist, aber die Erfindung beschränkt die Zuführungsarten in keiner Weise, sondern jeder Prozeß stellt seine eigenen Anforderungen an die Weiterverarbeitung. Die praktische Ausführung der Vorrichtung kann im Rahmen der Patentansprüche weitgehend variieren.

## Patentansprüche

1. Vorrichtung zum Herausziehen eines einzelnen Metallstabes aus einem aus mehreren Stäben bestehenden Stabbündel in einer Zugrichtung, die im wesentlichen der Längsrichtung der Stäbe des Bündels entspricht, mit einer zur Zugrichtung im wesentlichen senkrecht angeordneten Stabführung (1), in der sich eine V-förmige Öffnung befindet, von deren Grund aus sich ein in etwa lotrechter Führungsschacht (2) erstreckt und einer Zugvorrichtung (5, 6, 7), die so ausgebildet ist, daß sie einen einzelnen Stab aus dem Bündel zu greifen und herauszuziehen vermag, **dadurch gekennzeichnet,** daß die Stabführung (1) einen Zuführungsspalt (3), der quer zum Führungsschacht (2) verläuft und sich mit einem Ende zum unteren Ende des Führungsschachtes (2) öffnet, einen Schieber (4), der sich in Richtung des Zuführungsspaltes (3) im Zuführungsspalt oder neben diesem hin und her bewegt und dessen Bewegungslänge ungefähr so lang ist wie der Zuführungsspalt (3), und eine Stützplatte (8) aufweist, die sich in Zugrichtung in einem Abstand von der Stabführung (1) in einer Ebene im wesentlichen rechtwinklig zur Zugrichtung des Stabes befindet, wobei die Stabenden des Stabbündels sich gegen die Stützplatte (8) abstützen.

2. Vorrichtung nach Anspruch 1, **dadurch gekennzeichnet,** daß die Breite des Führungsschachtes (2) und des Zuführungsspaltes (3) mit einem separaten Stellteil (13) auf die Dicke des zu handhabenden Stabes einstellbar ist.

3. Vorrichtung nach Anspruch 1 oder 2, **dadurch gekennzeichnet,** daß die Zugvorrichtung auf einem mit Elektromotor (7) angetriebenen Treibrad (5) und einem gegen dessen Umfang und von diesem weg beweglichen, zu treibenden Treibrad (6) besteht, wobei der Stab zwischen diesen Rädern angeordnet ist, während er gezogen wird.

4. Vorrichtung nach einem der Ansprüche 1 bis 3, **dadurch gekennzeichnet,** daß sich in der Stützplatte (8) eine Öffnung (9) befindet, durch welche die untere Horizontaltangente des Umfangs des Treibrades (5) geht, womit beim Ziehen des Stabes dieser durch die Öffnung (9) läuft.

5. Vorrichtung nach einem der Ansprüche 1 bis 4, **dadurch gekennzeichnet,** daß Bewegungselemente (10, 11) vorgesehen sind, mit welchen die in der Nähe des Grundes der V-förmigen Öffnung befindlichen Stäbe bewegbar sind, um deren Herunterfallen in den Führungsschacht (2) zu erleichtern.

6. Vorrichtung nach einem der Ansprüche 1 bis 5, **dadurch gekennzeichnet,** daß im Winkel zwischen dem Führungsschacht (2) und dem Zuführungsspalt (3) ein Magnet, eine Feder oder ein Hebel angebracht ist, der den Stab in dem genannten Winkel hält, während der Stab nicht vom Schieber (4) getragen wird.

## Claims

1. Device for drawing a metal rod out of a rod bundle in a drawing direction essentially corresponding to the longitudinal direction of the rods in the bundle, with a rod guide (1) located essentially perpendicular to the drawing direction and provided with a V-shaped opening, from the base of which protrudes a roughly perpendicular guide shaft (2) and a drawing device (5, 6, 7), which is designed in such a way that it is able to grip and draw out a single rod from the bundle, **characterised in that** the rod guide (1) is fitted with a feed aperture (3), which runs transverse to the guide shaft (2) and one end of which opens towards the lower end of the guide shaft (2), a slide (4) which moves in the direction of the feed aperture (3) in the feed aperture, or back and forth next to it, and whose path of motion is approximately as long as the feed aperture (3), and a supporting plate (8) located in the drawing direction at a distance from the rod guide (1) in a plane essentially at right angles to the drawing direction of the rod, where the ends of the rods of the rod bundle are supported by the supporting plate (8).

2. Device as per Claim 1, **characterised** **in that** the width of the guide shaft (2) and of the feed aperture (3) can be adjusted with a separate operating element (13) to the thickness of the rod to be handled.

3. Device as per Claim 1 or 2, **characterised in that** the drawing device consists of a drive wheel (5) driven by an electric motor (7), and a drive wheel (6) to be driven against its circumference and movable therefrom, where the rod is positioned between these wheels while being drawn.

4. Device as per one of the Claims 1 to 3, **characterised in that** an opening (9) is provided in the supporting plate (8), through which the lower horizontal tangent of the circumference of the drive wheel (5) passes, whereby the rod runs through the opening (9) when being drawn.

5. Device as per one of the Claims 1 to 4, **characterised in that** moving elements (10, 11) are provided, with which the rods located near the base of the V-shaped opening can be moved in order to facilitate their dropping down into the guide shaft (2).

6. Device as per one of the Claims 1 to 5, **characterised in that** a magnet, a spring or a lever is mounted in the angle between the guide shaft (2) and the feed aperture (3) in order to hold the rod in the angle mentioned when the rod is not borne by the slide (4).

## Revendications

1. Dispositif pour retirer une barre métallique isolée d'un faisceau de barres composé de plusieurs barres dans un sens de traction correspondant sensiblement au sens longitudinal des barres du faisceau, avec un guide-barre (1) disposé de façon sensiblement verticale par rapport au sens de traction et dans lequel se trouve une ouverture en forme de V, du fond de laquelle s'étend un canal de guidage (2) à peu près pendiculaire, et avec un système de traction (5, 6, 7) qui est conçu de manière à pouvoir saisir et retirer une barre isolée du faisceau, dispositif caractérisé par ce que le guide-barre (1) présente une fente d'amenée (3) s'étendant transversalement au canal de guidage (2) et s'ouvrant avec une extrémité vers la fin inférieure du canal de guidage (2), un poussoir (4) effectuant, à l'intérieur de la fente d'amenée (3)ou à côté de celle-ci, un mouvement de va et vient en direction de la fente d'amenée, poussoir dont la longueur de déplacement correspond à peu près à la longueur de la fente d'amenée (3), et une plaque d'appui (8) qui, vue dans le sens de traction, se trouve à une distance du guide-barre (1) dans un plan sensiblement rectangulaire au sens de traction de la barre, et où les bouts de barres du faisceau de barres s'appuient contre la plaque d'appui (8).

2. Dispositif suivant revendication 1, caractérisé par ce que la largeur du canal de guidage (2) et celle de la fente d'amenée (3) sont réglables en fonction de la grosseur de la barre à manier au moyen d'une pièce de réglage (13) séparée.

3. Dispositif suivant revendication 1 ou 2, caractérisé par ce que le système de traction se compose d'une roue motrice (5) entraînée par un moteur électrique (7) et d'une roue motrice (6) à entraîner pouvant être approchée ou éloignée de la circonférence de la roue motrice entraînée, la barre se trouvant entre ces roues pendant qu'elle est retirée.

4. Dispositif suivant une des revendications 1 à 3, caractérisé par ce que la plaque d'appui (8) présente une ouverture (9) par laquelle passe la tangente horizontale inférieure de la circonférence de la roue motrice (5) ce qui a pour effet que, lors de sa traction, la barre passe par l'ouverture (9).

5. Dispositif suivant une des revendications 1 à 4, caractérisé par ce qu'il est prévu des éléments de mise en mouvement (10, 11) à l'aide desquels les barres se trouvant à proximité du fond de l'ouverture en forme de V peuvent être mues pour faciliter leur tombée dans le canal de guidage (2).

6. Dispositif suivant une des revendications 1 à 5, caractérisé par ce que dans l'angle entre le canal de guidage (2) et la fente d'amenée (3) est fixé un aimant, un ressort ou un levier qui maintient la barre dans ledit angle pendant que la barre n'est pas supportée par le poussoir.
